# EUROPÄISCHE PATENTSCHRIFT

(11) **EP 0 581 728 B1**
(45) Veröffentlichungstag und Bekanntmachung des Hinweises auf die Patenterteilung: **15.05.1996**
(21) Anmeldenummer: 93810498.1
(22) Anmeldetag: 13.07.1993
(51) Int. Cl.: B65G 47/38, B65G 47/96

(54) **Wagen eines Förderers für Stückgüter**
Conveyor carriage for piece-goods
Chariot d'un convoyeur pour marchandises

(30) Priorität: 30.07.1992 CH 2397/92
(43) Veröffentlichungstag der Anmeldung: 02.02.1994
(73) Patentinhaber: GRAPHA-HOLDING AG, CH-6052 Hergiswil (CH)
(72) Erfinder: Maier, Willy, CH-8302 Kloten (CH)

(56) Entgegenhaltungen:
- DE-A- 2 318 008
- US-A- 4 089 404

## Beschreibung

Die Erfindung betrifft einen Wagen eines Förderers für Stückgüter gemäss Oberbegriff des Anspruchs 1.

In Postbetriebszentren, Bahnhöfen, Flugplätzen und in Druckereien haben sich Förderer mit mehreren aneinander gekuppelten Wagen gemäss der EP-A-0 452 271 an sich bewährt. Die Förderer sind vorzugsweise Sortierförderer, die eine Länge von über 100 m und beispielsweise 200 Wagen aufweisen können. Die Wagen werden an Eingabeplätzen, beispielsweise mit einem Postpaket beladen, das nach einer gewissen Transportstrecke an einem vorgewählten Zielort durch Kippen der Transportschale über Rutschen und Transportbänder an seinen Bestimmungsort gelangt. Das Kippen der Transportschalen wird am Zielort beispielsweise durch pneumatisch betätigte Kulissen ausgelost. Bei einem solchen Sortierförderer müssen Störungen insbesondere beim Entladen der Wagen unbedingt vermieden sein.

Ein Wagen der genannten Art ist aus der US-A-4,089,404 bekannt geworden. Bei diesem wird eine Tragschale in einer vorbestimmten Schräglage mittels Blattfedern verriegelt. Zum Entriegeln wird die Tragschale mittels Führungen zurückgeschwenkt und damit die Verriegelung unter Auslenkung der Blattfedern aufgehoben. Diese Führungen müssen wenigstens so lange sein, wie der Kippweg. Ein ungewolltes Zurückkippen bei schweren Stückgütern könnte nur mit sehr starken Federn verhindert werden, was dann allerdings die Entriegelung entsprechend erschweren würde.

Der Erfindung liegt die Aufgabe zugrunde, einen Wagen der genannten Art zu schaffen, der insbesondere bezüglich des Entladevorganges noch zuverlässiger als bisher arbeitet. Der Wagen soll sich auch zum Transport von schweren Stückgütern, beispielsweise mit einem Gewicht von 30 kg oder mehr eignen.

Die Aufgabe ist bei einem gattungsgemässen Wagen gemäss Anspruch 1 gelöst.

Ein wesentlicher Vorteil der Erfindung besteht darin, dass die Kulisse kürzer sein kann als der ganze Kippweg, und dass auch in diesem Fall beim Fördern von grossen und schweren Stückgütern ein ungewolltes Zurückkippen der Transportschale sicher verhindert ist. Bei der Verwendung eines erfindungsgemässen Wagens können somit die Kulissen zum Kippen der Tragschalen wesentlich kürzer sein als der Kippweg, ohne dass dadurch zusätzliche Störungen befürchtet werden müssen. Vorteilhafte Weiterbildungen der Erfindung sind Gegenstand abhängiger Patentansprüche. Weitere vorteilhafte Merkmale und Vorteile können der Beschreibung sowie den Zeichnungen entnommen werden.

Ein Ausführungsbeispiel der Erfindung wird nachfolgend anhand der Zeichnungen näher erläutert. Es zeigen:
- Fig. 1: ein Schnitt entlang der Linie I-I der Fig. 3,
- Fig. 2: ein Schnitt entlang der Linie II-II der Fig. 3, und
- Fig. 3: eine Teilansicht des erfindungsgemässen Wagens.

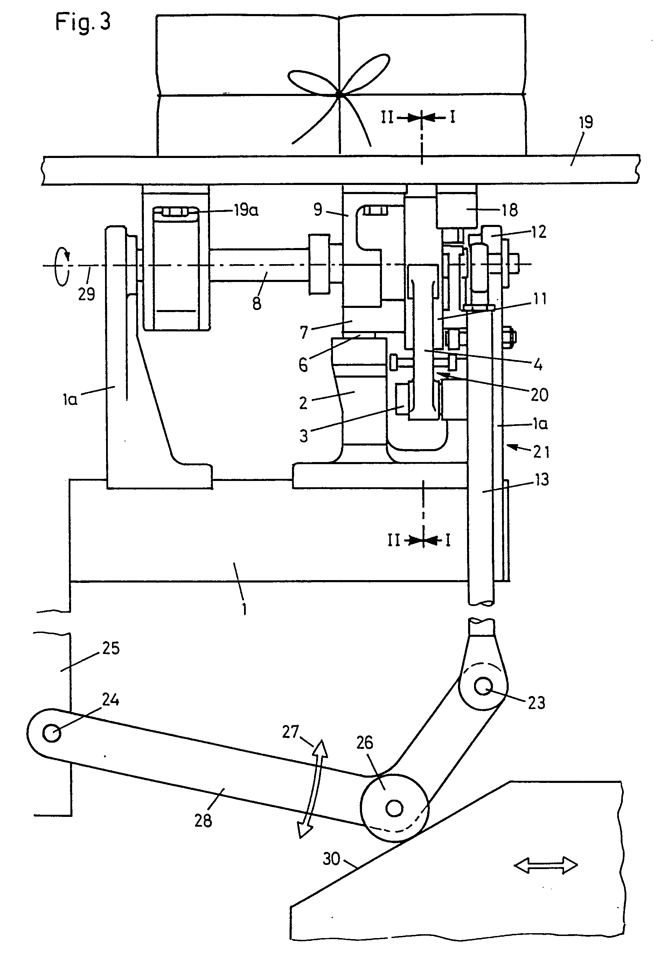

Der Wagen weist ein Gestell 1 mit vertikal nach oben ragenden Trägern 1a auf, an denen eine horizontale Welle 8 drehbar gelagert ist. Eine Tragschale 19 ist auf der Unterseite mit einem Halter 19a und einem Sperrsupport 9 fest mit der Welle 8 verbunden. Der Wagen ist auf hier nicht gezeigten Laufschienen geführt und kann mit einer ebenfalls nicht gezeigten aber an sich bekannten Antriebskette in Richtung der in Fig. 3 eingezeichneten Achse 29 der Welle 8 bewegt werden.

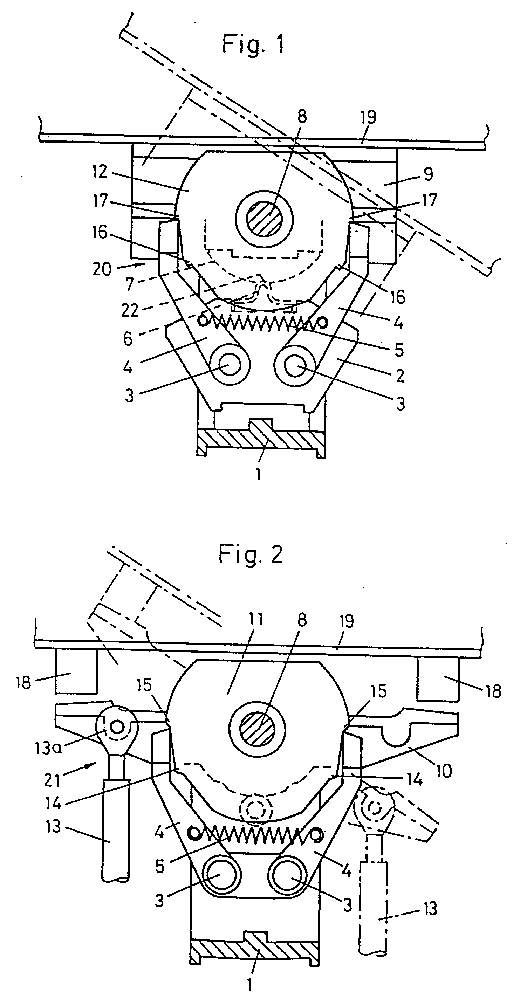

Mittels einer Kippeinrichtung 21 kann die Tragschale 19 an einem vorgewählten Zielort in der einen oder anderen Drehrichtung der Achse 29 gekippt werden. Dazu weist die Kippeinrichtung 21 zwei Schubstangen 13 auf, die jeweils am oberen Ende über ein Gelenk 13a mit einem Auslösearm 10 verbunden sind. Dieser Auslösearm 10 ist wie in Fig. 2 ersichtlich, ein zweiarmiger Hebel und ragt von der Welle 8 radial nach aussen. Am anderen Ende sind die Schubstangen 13 jeweils ebenfalls über ein Gelenk 23 mit einem Kniehebel 28 verbunden, der über ein Gelenk 24 am anderen Ende mit einem nach unten ragenden Träger 25 des Gestells 1 verbunden ist. Am Hebel 28 ist eine Rolle 26 angebracht, die zum Verschwenken des Hebels in Richtung des Pfeiles 27 mit einer in Fig. 3 gezeigten pneumatisch betätigbaren Kulisse 30 in Eingriff bringbar ist. Je nach dem, welcher Hebel 28 um die Achse des Gelenkes 24 verschwenkt wird, wird der Auslösearm 10 in der einen oder anderen Richtung um die Welle 8 verschwenkt. In der Ansicht gemäss Fig. 2 wird beim Anheben der linken Schubstange 13 der Auslösearm 10 von der mit ausgezogenen Linien gezeigten Stellung in die strichpunktiert gezeigte Stellung verschwenkt. Hierbei stösst der linke Arm des Auslösarms 10 nach einer kurzen Drehung gegen einen unterseitig an der Tragschale 19 befestigten Puffer 18 und schwenkt entsprechend die Tragschale 19 um die Welle 8. Bei einem Kippen der Schale 19 in Gegenuhrzeigersinn wird entsprechend der rechts eingezeigte Puffer 18 vom Auslösearm 10 beaufschlagt.

Mittels einer Verriegelungseinrichtung 20 wird die Tragschale 19 sowohl in der horizontalen Lage als auch in den beiden Schräglagen lösbar verriegelt. Dazu weist diese eine Sperrscheibe 12 mit Verriegelungsnasen 16 und 17 auf, die am Sperrsupport 9 befestigt und damit fest mit der Tragschale 19 verbunden ist. Auf der Welle 8 ist ebenfalls neben der Sperrscheibe 12 eine Stellscheibe 11 angeordnet, die mit dem Auslösearm 10 verbunden ist und die in Richtung der Welle 8 gesehen jeweils vor einer Verriegelungsnase einen Stellnocken 14 bzw. 15 aufweist. Die Verriegelunseinrichtung besitzt zudem zwei symmetrisch angeordnete Sperrklinken 4, die schwenkbar an jeweils an einem fest mit dem Gestell 1 verbundenen Zapfen 3 eines Anschlagsupports 2 schwenkbar gelagert sind. In der in Fig. 1 gezeigten horizontalen Lage der Transportschale 19 greifen beide Sperrklinken 4 unter Zugspannung einer Feder 5 an der Sperrscheibe 12 an und verriegeln die Sperrscheibe 12 mit der darauf befestigten Transportschale 19 gegen ein Verkippen um die Welle 8. Aus dieser Lage kann die Transportschale 19 beispielsweise in Fig. 1 in Uhrzeigersinn verschwenkt werden, indem durch eine entsprechende Bewegung der Schubstangen 13 der Auslösearm 10 ebenfalls im Uhrzeigersinn um die Welle 8 verschwenkt wird. Die mit dem Auslösearm 10 mitgehende Stellscheibe 11 lenkt bei dieser Bewegung die freien Enden der Sperrklinken 4 mittels der Stellnocken 15 radial aus wodurch die Sperrklinken 4 von den Verriegelungsnasen 17 abgehoben werden. Die Sperrscheibe 12 ist damit entriegelt und diese kann zusammen mit der Stellscheibe 11 und der Transportschale 19 entsprechend in eine zur Abgabe eines Stückgutes geeignete Lage gekippt werden. Ist diese Schräglage erreicht, so gleitet eine der Sperrklinken 4 unter Zugspannung der Feder 5 unter eine der Verriegelungsnasen 16 und verhindert dadurch ein Zurückschwenken der Transportschale 19. Ein Ueberkippen der Tragschale 19 wird durch eine Anlage des Sperrsupports 9 am Anschlagsupport 2 verhindert. Wesentlich ist nun, dass ein Zurückschwenken durch den Eingriff einer Sperrklinke 4 an der Sperrscheibe 12 auch dann verhindert ist, wenn die Schubstangen 13 nicht in Eingriff mit einer Kulisse 30 sind, die Transportschale 19 somit nicht stützen können. Die mit der Rolle 26 zusammenwirkende Kulisse 30 kann somit vergleichsweise kurz sein.

Damit die Transportschale 19 beim Zurückschwenken in die horizontale Lage diese zuverlässiger und schneller findet, ist auf dem Anschlagsupport eine Fangfeder 6 angeordnet, die beim Erreichen der genannten horizontalen Lage in eine Rastnut 22 eines am Sperrsupport 9 befestigten Fangsegments 7 einrastet. Dadurch wird insbesondere das Eingreifen der Sperrklinken 4 an der Sperrscheibe 12 zur Verriegelung der Transportschale 19 in der horizontalen Lage zuverlässiger erreicht.

## Patentansprüche

1. Wagen eines Förderers für Stückgüter, mit einer am Wagengestell (1) gelagerten Transportschale (19) und mit einer Kippeinrichtung (21) zum Kippen der Transportschale (19), wobei die Transportschale (19) in der zur Abgabe eines Stückgutes vorbestimmten Schräglage selbsttätig verriegelt wird und Stellmittel (11) zur Entriegelung der genannten Schräglage mittels der Kippeinrichtung (21) vorgesehen sind, dadurch gekennzeichnet, dass zur Verriegelung auf einer horizontalen Welle (8) eine mit der Transportschale (19) verbundene Sperrscheibe (12) und eine mit der Kippeinrichtung (21) verbundene Stellscheibe (11) angebracht sind und dass mit dem Wagengestell (1) wenigstens eine schwenkbare Sperrklinke (4) verbunden ist, welche in der genannten Schräglage mit der Sperrscheibe (12) in Eingriff ist.

2. Wagen nach Anspruch 1, dadurch gekennzeichnet, dass an der Sperrscheibe (12) ein Auslösearm (10) der Kippeinrichtung (21) befestigt ist, der zum Kippen der Transportschale (19) vorzugsweise unterseitig an dieser anlegbar ist.

3. Wagen nach Anspruch 1 oder 2, dadurch gekennzeichnet, dass an der Unterseite der Transportschale (19) ein Sperrsupport (9) mit einem Fangsegment (7) angeordnet ist und mit dem Wagengestell (1) eine Fangfeder (6) verbunden ist, welche bei horizontaler Lage der Transportschale (19) in eine Rastnut (22) des Fangsegments (7) eingerastet ist.

4. Wagen nach Anspruch 3, dadurch gekennzeichnet, dass am Wagengestell (1) ein Anschlagsupport (2) zur Begrenzung des Schwenkbereichs der Transportschale (19) angeordnet ist und dieser gleichzeitig als Träger für die Fangfeder (2) dient.

5. Wagen nach Anspruch 1, dadurch gekennzeichnet, dass die Transportschale (19) in Laufrichtung gesehen nach links oder rechts kippbar ist.

6. Wagen nach Anspruch 5, dadurch gekennzeichnet, dass die Kippeinrichtung (21) einen von der Welle (8) radial abstehenden zweiarmigen Auslösearm (10) aufweist, wobei in der einen Schwenkrichtung der eine Teil des Arms (10) und in der anderen Richtung der andere Teil des Arms an der Tragschale (19) anlegbar ist.

7. Wagen nach Anspruch 5 oder 6, dadurch gekennzeichnet, dass die Sperrscheibe (12) vier Verriegelungsnasen (16,17) und die Stellscheibe (11) vier Stellnocken (14,15) aufweist.

8. Wagen nach einem der Ansprüche 1 bis 7, dadurch gekennzeichnet, dass die Kippeinrichtung (21) wenigstens eine Schubstange (13) aufweist, die zum Kippen der Transportschale (19) beispielsweise mittels einer Kulisse (30) vertikal bewegbar ist.

9. Wagen nach einem der Ansprüche 1 bis 8, dadurch gekennzeichnet, dass die Kippeinrichtung (21) im unteren Bereich des Gestells (1) einen Hebel (28) aufweist, der gelenkig an einer Schubstange (13) und am Gestell (1,25) befestigt ist und der eine Rolle (26) aufweist, die zum Verschwenken der Transportschale (19) beispielsweise mit einer Kulisse (30) in Eingriff bringbar ist.

## Claims

1. Carriage of a conveyer for piece-goods, comprising a transport dish (19) which is mounted on the carriage chassis (1) and a tipping mechanism (21) for tipping the transport dish (19), and that the transport dish (19) is automatically locked in a predetermined slanted position for dispensing an item, and that control means (11) are provided for unlocking said slanted position by means of a tipping mechanism (21), **characterized in that** a blocking disc (12) which is connected to the transport dish (19) and a control disc (11) which is connected to the tipping mechanism (21) are fitted for locking on a horizontal shaft (8), and that at least one pivotal blocking latch (4), which engages the blocking disc (12) in said slanted position, is connected to the carriage chassis (1).

2. Carriage according to Claim 1, **characterized in that** attached to the blocking disc (12) is a release arm (10) of the tipping mechanism (21), which is preferably applied at the bottom of the transport dish (19) for the purpose of tipping the latter.

3. Carriage according to Claim 1 or 2, **characterized in that** attached to the bottom of the transport dish (19) is a blocking support (9) with a catch segment (7), and connected to the carriage chassis (1) is a catch spring (6) which is engaged in a detention groove (22) of the catch segment (7) when the transport dish (19) is horizontally positioned.

4. Carriage according to Claim 3, **characterized in that** attached to the carriage chassis (1) is an abutment support (2) which both defines the pivot range of the transport dish (19) and serves as a carrier of the catch spring (2).

5. Carriage according to Claim 1, **characterized in that** the transport dish (19) can be tipped to the left or right, as seen in the running direction.

6. Carriage according to Claim 5, **characterized in that** the tipping mechanism (21) comprises a two-arm release arm (10) which projects radially from the shaft (8), and that in the one pivoting direction the one portion of the arm (10), and in the other direction the other portion of the arm can be applied to the carrier dish (19).

7. Carriage according to Claim 5 or 6, **characterized in that** the blocking disc (12) comprises four locking hooks (16, 17), and the control disc (11) comprises for control cams (14, 15).

8. Carriage according to Claims 1 to 7, **characterized in that** the tipping mechanism (21) comprises at least one pushrod (13) which is vertically movable, for example by means of a link (3), for the purpose of tipping the transport dish (19).

9. Carriage according to one of Claims 1 to 8, **characterized in that** the tipping mechanism (21) comprises in the lower area of the chassis (1) a lever (28), which is hinged onto a pushrod (13) and attached to the chassis (1, 25), and a roller (26) which engages, for example, a link (30) for the purpose of pivoting the transport dish (19).

## Revendications

1. Chariot d'un convoyeur pour marchandises, comprenant une coupe de transport (19) montée sur le chassis (1) du chariot et un dispositif de basculement (21) pour faire basculer la coupe de transport (19), la coupe de transport (19) se verrouillant automatiquement dans la position inclinée préalablement déterminée pour décharger une marchandise, et des moyens de réglage (11) étant prévus pour déverrouiller ladite position inclinée au moyen du dispositif de basculement (21), caractérisé en ce que, pour procéder au verrouillage, un disque d'arrêt (12) relié à la coupe de transport (19) et un disque de réglage (11) relié au dispositif de basculement (21) sont fixés sur un arbre horizontal (8), et en ce qu'au moins un cliquet d'arrêt pivotant (4) est relié au châssis (1) du chariot, cliquet qui, dans la position inclinée, est en prise avec le disque d'arrêt (12).

2. Chariot selon la revendication 1, caractérisé en ce que sur le disque d'arrêt (12) est fixé un bras de déclenchement (10) du dispositif de basculement (21), bras qui, pour faire basculer la coupe de transport (19), peut, de préférence, être appliqué sur le dessous de celle-ci.

3. Chariot selon la revendication 1 ou 2, caractérisé en ce qu'un support d'arrêt (9) muni d'un segment de capture (7) est disposé sur le dessous de la coupe de transport (19) et un ressort de capture (6) est relié au châssis (1) du chariot, ressort qui, lorsque la coupe de transport (19) est en position horizontale, est en prise avec une rainure d'enclenchement (22) du segment de capture (7).

4. Chariot selon la revendication 3, caractérisé en ce qu'un support de butée (2) destiné à limiter la zone de pivotement de la coupe de transport (19) est disposé sur le châssis (1) du chariot, et en ce qu'il sert simultanément de support au ressort de capture (2).

5. Chariot selon la revendication 1, caractérisé en ce que, vu dans le sens de déplacement, la coupe de transport (19) peut basculer vers la gauche ou vers la droite.

6. Chariot selon la revendication 5, caractérisé en ce que le dispositif de basculement (21) présente un bras de déclenchement à deux bras (10) faisant saillie radialement de l'arbre (8), sachant que, dans un sens de pivotement, l'une des parties du bras (10) peut s'appliquer contre la coupe de transport (19) et, dans l'autre sens de pivotement, l'autre partie du bras peut s'appliquer contre la coupe de transport.

7. Chariot selon la revendication 5 ou 6, caractérisé en ce que le disque d'arrêt (12) présente quatre saillies de verrouillage (16, 17) et le disque de réglage (11) quatre saillies de réglage (14, 15).

8. Chariot selon l'une des revendications 1 à 7, caractérisé en ce que le dispositif de basculement (21) présente au moins une bielle (13) qui, pour faire basculer la coupe de transport (19), peut être déplacée verticalement, par exemple, au moyen d'une coulisse (30).

9. Chariot selon l'une des revendications 1 à 8, caractérisé en ce que le dispositif de basculement (21) présente dans la partie inférieure du châssis (1) un levier (28) qui est fixé de manière articulée à une bielle (13) et au châssis (1, 25) et qui, pour faire basculer la coupe de transport (19), présente un galet (26) pouvant être mis en prise, par exemple, avec une coulisse (30).
